# EUROPEAN PATENT SPECIFICATION

(11) **EP 4 282 251 B1**
(45) Date of publication and mention of the grant of the patent: **23.09.2026**
(21) Application number: 22175585.3
(22) Date of filing: 25.05.2022
(51) Int. Cl.: A01F 15/08, B62D 13/04, B62D 13/06

(54) **A ROTATABLE SUPPORT FOR A GROUND-ENGAGING ELEMENT**
DREHBARE HALTERUNG FÜR EIN BODENEINGRIFFSELEMENT
SUPPORT ROTATIF POUR UN ÉLÉMENT DE CONTACT AVEC LE SOL

(43) Date of publication of application: 29.11.2023
(73) Proprietor: CNH Industrial Belgium N.V., 8210 Zedelgem (BE)
(72) Inventor: Monteyne, Niklaas G. C., 8370 Blankenberge (BE)
(74) Representative: CNH Industrial IP Department

(56) References cited:
- EP-B1- 1 364 573
- US-A1- 2006 283 167
- US-A1- 2009 032 273
- US-A1- 2009 199 603
- US-A1- 2013 014 480
- US-B2- 7 147 241

## Description

The disclosure hereof relates to a rotatable support for a ground-engaging element of a vehicle. In particular the vehicle may be an agricultural baler, although the incorporation and use of rotatable supports as disclosed herein in other vehicle types is not precluded.

As is well known an agricultural baler typically is hitched in use to the rear of an agricultural tractor. The tractor tows the baler and supports the forwardmost part of it, or (depending on the baler design) co-operates with a front support wheel arrangement, such that a plant matter pick-up is located close to the ground over which the baler travels when in use. The pick-up collects plant matter lying on the ground and conveys it inside the baler where it is formed into bales, i.e. dense, self-supporting shapes such as cylinders or cuboids constituted by plant matter.

Typically at approximately its longitudinal mid-point the baler is supported from underneath by at least one pair of laterally disposed, i.e. left and right, wheels that engage the ground over which the baler is towed by the tractor. The wheels typically include resiliently deformable, usually air-filled, tyres that accommodate localised changes in the height of the ground. The wheels are secured to respective rotatable supports in the form of rotatable hubs that in turn are supported on axles or stub axles, depending on the precise design of the baler. The axles in some baler designs include suspension parts that further assist to accommodate unevenness of the ground over which the baler travels.

The hitch via which a baler is secured to a towing tractor permits swivelling of the tractor-baler connection both in a horizontal plane and a vertical plane. Swivelling in a horizontal plane permits articulation of the connected tractor-baler combination and allows it to steer to the left and right as may be desired in order to manoeuvre about a field or on e.g. roads and farmyards on which the baler also may be towed. The ability to swivel in a vertical plane accommodates differences between the heights of the tractor and the baler if the tractor-baler combination travels over uneven or inclined ground.

It is known for a baler to include two wheels on each of the left- and right-hand sides mounted on respective front and rear supports (hubs) that are rotatably mounted on axles (which may be axles or stub axles). Such an arrangement is referred to herein as a tandem axle arrangement and is *per se* familiar in baler technology. Single axle balers also are described hereinbelow.

When configured to include tandem axles it is desirable for the baler to permit steering of at least one set of left- and right-hand wheels on their axles. This reduces or eliminates the skidding resistance that would otherwise arise from attempting to pivot the baler about a vertical axis lying between the front and rear sets of wheels, as is a consequence of slewing of the baler to the left or right via the forwardly located towing hitch. Steerable axles moreover permit a baler to perform tighter turns than balers having tandem axles that lack steerability (because the pivot point of the baler is as a result of the steerability more forwardly located than would otherwise be the case).

One or both the front and/or rear baler wheel axles/stub axles of a tandem axle design may be steerable; and steerable axles also are known in balers having only a single axle supporting only a single left-hand and a single right-hand wheel.

US 2009/0199603 A1 describes a land vehicle with a wheeled axle that is operable to be selectively self-steering. The axle includes a ground wheel that is operable to be selectively locked into a straight-ahead position so that self-steering is restricted. The land vehicle also includes a wheel lockout indicator system that is operable to sense when the ground wheel is locked in the straight-ahead position and can alert an operator by confirming that the ground wheel has been locked in the straight-ahead position.

Although it is known to provide hydraulically powered steering components that act on towed vehicle axles in order actively to steer them, such arrangements add to the cost and complexity of the vehicles. Hence the baler axle or stub axle in many vehicle designs is a passive steering arrangement in which, as an alternative to an active steering mechanism, the axle/stub axle is mounted so it is pivotable about a vertical axis that intersects the horizontally extending axis of rotation of the hub at a location laterally inwardly spaced from the hub itself. A spring biassing mechanism is connected to urge the axle/stub axle to an orientation, about the vertical axis, corresponding to straight-ahead movement of the baler unless the latter experiences a turning force (induced by steering of the towing tractor) that overcomes the spring biassing. The axle/stub axle at such a time then pivots about the vertical axis against the restoring spring force; and when the force inducing this steering action reduces or ceases at the end of a steering manoeuvre the axle is returned by the biassing spring to the mentioned straight-ahead position.

Steering arrangements of this kind are advantageous because they operate without requiring any energy or control inputs, in a manner avoiding tyre wear or tearing of tyre material, or ground or crop damage, that might otherwise occur when a heavy baler having tandem axles as described is caused to turn.

However it is from time to time a disadvantage for one or more axles of a baler to be passively steerable as explained. In particular when it is desired to drive the baler in a reverse direction, i.e. such that it is pushed rearwardly rather than drawn forwardly by the connected tractor, a passive steering axle may pivot in a manner overcoming the restoring spring force even though from the standpoint of steering stability it would be desirable for this not to occur.

In other words the described steerable axles at such a time contribute to steering instability of the tractor-baler combination in the horizontal plane in which the baler turns to the left or right. It is therefore known to be able selectively to lock the steerable axles/stub axles of a baler having a passive axle steering set-up so the wheels (or other ground engaging elements if provided) can be fixed in an orientation corresponding to straight ahead or straight reversing movement and thereby improve control during reversing manoeuvres. However as explained below a steering lock arrangement is not easily included in many tractor-baler combinations and may not be convenient for the operator of the tractor-baler combination to use.

Moreover when a baler is towed on e.g. a road or farm track the towing speed may (in the case of tractors intended for European markets) reach 40 km/h. At this or (in many cases) even somewhat lower speeds the steerable nature of the baler axles may cause the baler to *"hunt"* (i.e. oscillate to the left and right) behind the tractor. This is potentially a dangerous situation. The weight of a baler may, depending on the model, be in the range of approximately 1 - 16 tonnes. A mass of this magnitude oscillating behind a tractor weighing perhaps 1 - 4 tonnes (in the case of say a 100 - 150 hp tractor) travelling at close to its maximum speed may destabilise the tractor leading to a loss of control and/or potentially very serious accident situations.

Even if hunting of the baler does not occur, if an emergency braking situation arises any instability of the baler may contribute to poor control of the tractor at such a time. Instability also can be apparent when the tractor-baler combination travels downhill.

As mentioned therefore it is known to provide balers having steerable axles/stub axles to include locks that are capable of locking the axles in the straight ahead (i.e. most baler-stable) orientation relative to the vertical axes. When tandem axle sets are present these sometimes are referred to as *"tandem locks".*

Such locks typically are actuated electrically, hydraulically or electro-hydraulically. Such actuation can be based on commands generated in one or more processors in or forming part of the tractor or baler.

In this regard some new tractors and balers meet an information/control/communications connection standard called ISOBUS Class 3 or TIM (the successor standard to ISOBUS Class 3, *"TIM"* standing for Tractor Implement Management). If provided for such a protocol permits the processor of the tractor to determine various parameters of operation, including the speed of travel and whether this is in a forward or reverse direction. An ISOBUS Class 3/TIM-equipped tractor then can generate a command to the actuation systems of the baler e.g. to lock or unlock the baler steering lock depending on the speed and direction of motion; or it may generate an alert that prompts a tractor operator to initiate locking of the steering e.g. using a control element such as a pushbutton or lever (i.e. semi-automated operation of the steering lock).

Control protocols such as ISOBUS Class 3/TIM however are only supplied as standard equipment on the most expensive tractors. They are extra-cost options on certain midrange tractors and therefore are not always specified. ISOBUS Class 3/TIM may not be available even as options for some low-cost tractors; and many old tractors pre-date the introduction of ISOBUS protocols altogether. Consequently there exist many thousands of tractors that are not equipped to provide automated or even semi-automated actuation of a baler steerable axle lock. Nonetheless it remains desirable to provide for automated baler steering lock operation, at low cost and in a reliable manner.

According to the invention in a broad aspect there is provided a rotatable support arrangement for a ground engaging-element of a vehicle, the arrangement including a support that is rotatable about an axis of rotation in directions corresponding to forward and reverse movement of the vehicle; and that defines a circumference secured to which is a sensor element that is mounted for co-rotation with the support, wherein the arrangement further includes a sensor located to detect the sensor element on rotation of the support and wherein the extent to which the sensor element stimulates the sensor varies with position around the circumference such that the sensor generates a signal that is characteristic of the rotational position of the sensor element relative to the sensor.

Such an arrangement is advantageous because it permits a baler to include an on-board sensor of the direction of rotation of at least one wheel, or other ground-engaging element; and also indicate the speed of rotation in accordance with signal analysis techniques as further described herein. Hence the baler is not reliant on the provision of processing and communications equipment meeting the ISOBUS Class 3 or TIM standard in the towing tractor; and instead the baler itself is made capable, through operation of the described elements, of generating steering lock commands (that typically are, but need not necessarily be, electrical/electronic signals) and hence actuating a steering lock itself.

In more detail the sensor element preferably stimulates the sensor in proportion to the amount of material constituting the sensor element that is for the time being adjacent the sensor, and the amount of material constituting the sensor element varies with position around the circumference. Consequently the sensor element readily is capable of stimulating the sensor to an extent that is related to the rotational position, speed of rotation and/or direction of rotation of the sensor element, and hence of the rotatable support. The resulting variations in the extent of stimulation of the sensor may be manifested for example as variations in the amplitude of an electrical signal that is output by the sensor; or as variations of another parameter that is variable on activation of the sensor.

Such effects may be attained in one optional embodiment of the invention through protrusion of the sensor element from the circumference in a direction parallel to the axis of rotation of the support, wherein the extent of protrusion of the sensor element varies with position around the circumference. As a result rotation of the support causes the distance between the sensor element and the sensor to vary with rotational position of the support. This in turn gives rise to variations in the sensor output signal as aforesaid.

In embodiments described herein the sensor element optionally extends over the whole of the circumference and increases in protrusion along the circumference from a start location corresponding to little or no protrusion to a location of maximal protrusion adjacent the start location.

This advantageously provides for the generation of a signal, by the sensor, that is continuous over each cycle of rotation of the support and is of characteristic form depending on whether the support is rotating clockwise or anticlockwise. Hence the features of the invention permit ready discrimination, using a single sensor, between rotation of the support corresponding to forward motion of the vehicle; and rotation corresponding to motion in a reverse direction.

However it is not essential that the sensor element is detectable over the whole circumference defined by the support; and on the contrary it is possible to devise arrangements in which the sensor element is present over only part of the support corresponding to less than 360° of rotation. Hence it is for instance possible to provide a series of protrusions within the scope of the invention.

Preferably the protrusion of the sensor element from the circumference increases smoothly and continuously between the start location and the location of maximal protrusion. This beneficially assists in the creation of a signal that is proportional to the rotational position of the support. However this need not necessarily be the case; and various effects may be achieved by providing a sensor element the extent of protrusion of which is not smoothly and continuously variable as stated.

In an alternative or additional aspect the sensor element may define a width that varies with position around the circumference. This is a further or alternative way of providing for variation of the extent to which the sensor element stimulates the senor with position around the circumference.

In such an embodiment preferably the sensor element extends over the whole of the circumference and increases in width along the circumference from a start location corresponding to minimal width to a location of maximal width adjacent the start location. In other words it is possible by varying the width of the sensor element to provide a similar effect to that explained above of varying the extent of protrusion of the sensor element and thereby giving rise to rotation-dependent variations in the output of the sensor.

It further preferably is possible that the width of the sensor element increases smoothly and continuously between the start location and the location of maximal width; or (as explained above) that such variation is discontinuous and/or other than smoothly changing.

Another option is for the density of the material of the sensor element to vary similarly to the protrusion and/or width variations; or indeed for the material of the sensor element not to be the same at all locations and thereby give rise to sensor signal output variations that are related to the rotational position of the support. However it is suspected that such embodiments while lying within the scope of the disclosure hereof may be harder to manufacture within the cost and robustness constraints mentioned above than the variable protrusion/variable width embodiments that are preferred.

The sensor is operatively connected to one or more processor that is capable of processing one or more signals generated in use by the sensor, the one or more processor being capable of determining one or more of:
a) the rate of change of the signal, being proportional to the speed of rotation of the support; and/or
b) whether the magnitude of the signal is increasing or decreasing, being an indication of the direction of rotation of the support; and/or
c) whether the rate of change of the signal exceeds a threshold value corresponding to a threshold speed of rotation of the support,
and generating one or more output signals in dependence thereon.

Hence the apparatus may readily produce one or more of a number of characteristic output signals as aforesaid. The sensor arrangement however is cheap to construct, is robust in use and produces outputs the computing overhead of which is minimal and hence suitable for incorporation in relatively low-cost balers.

Examples of sensor types that are suitable for use in embodiments disclosed herein include but are not limited to inductive sensors, laser sensors, magnetic sensors, acoustic sensors and optical sensors. Inductive sensors are particularly preferred because (a) they are comparatively cheap to buy and install; (b) they are highly suitable for detecting ferromagnetic materials, from which the support and the sensor element typically would be manufactured; and (c) they are not affected by dust, which is a very important consideration in the design of baler sub-systems. Therefore when the support and sensor element are made from e.g. a steel alloy a highly reliable sensing mechanism, that produces high-amplitude (and hence unambiguous) signals, may result.

In particularly convenient embodiments the rotatable support is configured as the rotatable hub of an axle of a ground-engaging wheel, and in particular a ground-engaging wheel of an agricultural baling machine. The sensor element forming part of the rotatable support may readily be formed or secured on one face of such a hub, which in a typical agricultural vehicle will naturally be designed to rotate about the horizontal axis of rotation defined above. Hence the invention through relatively minor modification takes advantage of the provision of a conventional hub that supports a ground-engaging element such as a wheel of a baling machine.

Further preferably, assuming the sensor is connected as aforesaid to one or more processor, the agricultural baling machine may include at least one steerable axle supporting one or more ground-engaging wheels; and a lock mechanism for temporarily preventing steering of a said steerable axle, wherein the one or more output signals of the one or more processor is capable of activating or deactivating, as required, the lock mechanism. Such activation and deactivation may be based on one or more of the command signal techniques described herein.

Even more preferably the baling machine may include two axles at least one of which is steerable and the lock mechanism may be configured as a tandem lock.

Preferably at least one said steerable axle is pivotable about a vertically extending axis that intersects the said axis of rotation at a location spaced from the rotatable support along the axis of rotation; and at least one resiliently deformable member may be connected to provide a biassing force that urges the rotatable support to an orientation, about the vertically extending axis, that corresponds to straight ahead movement of the baling machine.

In an embodiment disclosed herein the rotatable support instead of being e.g. a hub of a ground-engaging wheel may be or may include a drivewheel, a roller, an idler or a sheave of a ground-engaging track.

The disclosure hereof further extends to a vehicle including one or more rotatable support as defined herein. In preferred embodiments the vehicle is a baler that is intended to be towed behind a tractor and draw operational power via a power take-off forming part of the tractor. However the invention is not limited to use in balers and may be employed in other vehicle types, especially of kinds that in use are towed behind tractors (which as explained may not include facility for automatically or semiautomatically actuating a steering lock such as but not limited to a tandem lock). Further, non-limiting examples of vehicles in which the invention may be provided include grain trailers or crop sprayers having one or more steerable axle or stub axle pair.

Embodiments of the invention are suitable for inclusion in all vehicle, especially baling machine, types and machinery combinations disclosed herein. The disclosure of embodiments or parts of embodiments herein includes their disclosure in combination with all vehicle, especially baling machine, types and machinery combinations referred to herein, even if these are indicated as forming part of the prior art.

The terms *"baling machine"* and *"baler"* are used synonymously herein and in the art generally.

The term *"control device"* includes but is not limited to one or more logic circuits and/or programmable devices as described herein.

The term *"ground-engaging element"* may include but is not limited to rotatable ground-engaging wheels and cyclically moveable ground-engaging tracks.

The term *"logic circuit"* includes within its scope, but is not limited to, electronic circuits, Op Amp circuits, pneumatic or hydraulic logic circuits and software analogues of such circuits as may be embodied or visualised using simulation packages such as but not limited to VisSim^{™}. Logic circuits as referred to herein, whether programmable or not, non-limitingly may be permanently wired, temporarily wired, created through use of wireless communication techniques or formed as for example integrated circuits. Software logic circuits are also within the scope of the disclosure and may be employed to control and/or process signals in the same way as physical circuits.

Logic circuits and programmable devices as referred to herein may be modular in the sense of their parts being contained within a common housing; or they may occupy more than one location in the baling machine. Logic circuits and programmable devices may be formed as a number of distributed components not all of which, or indeed potentially none of which, are physically located on or in the baling machine (or other type of towed vehicle). Logic circuits and programmable devices as referred to may include or be connected to, or may omit (as appropriate), one or more display, printing, signal transmission, signal reception, human interface and/or data interface or receipt devices. Overall considerable variability of the exact forms of logic circuits, programmable devices and other control devices is possible within the scope hereof as will occur to the person of skill in the art. Such devices are generically referred to herein as *"processors".*

The term *"plant matter"* and derivatives includes all types of matter that potentially may be ingested into a baling machine for the purpose of being formed into bales.

The term *"power take-off"* is synonymous with the acronym *"PTO".*

The term *"programmable device"* includes within its scope, but is not limited to, microprocessors, ASICs, handheld devices (including smartphones), portable computing devices such as laptop computers and non-portable computing devices that are operatively connected (e.g. using wires or wirelessly) in order to perform functions as described.

The term "*signal*" except where the context requires otherwise is generally taken herein to be an electrical or electronic signal. In general in embodiments described herein the transmission of signals occurs by way of wired connections, and these are taken to be provided in sufficient quantity and extent to provide for the described signal transmissions. However other forms of signal transmission, including wireless transmission, are possible.

The term *"tractor"* embraces a wide variety of machines, especially vehicles, that are potentially capable of towing or otherwise causing locomotion of a baling machine or other towed vehicle, as will be known to the person of skill in the art.

Control devices, programmable devices and logic circuits as disclosed herein may include apparatus specially constructed for the required purposes, or may comprise one or more general-purpose computers, selectively activated or reconfigured by a computer program stored in the computer. Such a computer program may be stored in a non-transitory computer readable storage medium, which could be, but is not limited to, any type of disk including floppy disks, optical disks, CD-ROMs, an magnetic-optical disks, read-only memories (ROMs), random access memories (RAMs), EPROMs, EEPROMs, magnetic or optical cards, application specific integrated circuits (ASICs), so-called *"thumb drives"* and *"memory sticks",* or any type of media suitable for storing electronic instructions, and each coupled or capable of being coupled to a computer system bus. Furthermore, any computers or similar or derivative devices referred to may include a single processor, or may be architectures employing multiple processor designs for increased computing capability.

There now follows a non-limiting description of preferred embodiments of the disclosure hereof, with reference being made to the accompanying figures in which:
Figure 1 is a perspective view of a tractor towing a so-called large rectangular baler having tandem axles supporting left and right front and rear ground-engaging wheels, and of which the rear axle is steerable as described herein;
Figure 2 is a perspective view taken from a point spaced along one of the axles of a support arrangement in accordance with the invention including a wheel hub and a sensor;
Figure 3 is a plot of the output of a sensor forming part of the Figure 2 embodiment against time, and helps to explain the preferred sensing principles disclosed herein;
Figure 4 is a flow chart summarising an operational sequence of embodiments as disclosed herein;
Figure 5 is a plot, that is similar to Figure 3, showing typical outputs of a sensor forming part of the apparatus disclosed herein when a sensed ground-engaging element is rotating at a non-constant speed; and
Figure 6 is a perspective view that is similar to Figure 2 and illustrates one alternative hardware arrangement, of many possible embodiments, within the scope of the invention.

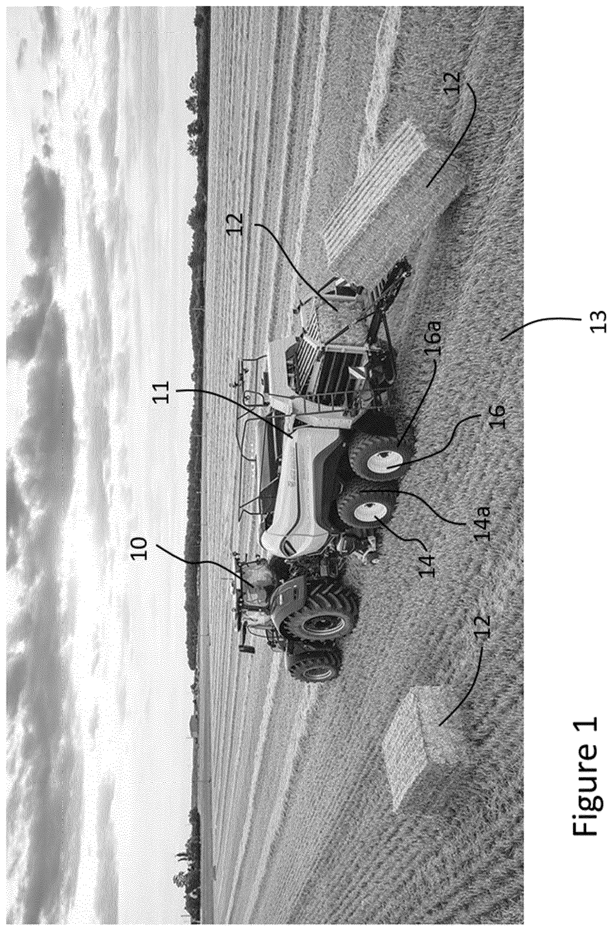

Referring to the figures, Figure 1 as noted shows an agricultural tractor 10 that is hitched to and capable of towing a vehicle that in the illustrated embodiment is a baling machine 11. The hitch and PTO arrangements connecting the baler and tractor together are of kinds that are well-known to those of skill in the art and do not require describing herein.

Baling machine 11 is of a kind referred to as a high-density rectangular baler, as a result of its ability to produce cuboidal bales of plant matter such as straw. Examples 12 of such bales are visible in Figure 1, in the process of being or after being discharged onto the surface of the field 13 in which the tractor-baler combination is operating.

The disclosure hereof is not however limited to rectangular balers; and indeed the towed vehicle need not be a baling machine at all. Consequently the baling machine 11 could be replaced by any of a range of alternative towed vehicles including but not limited to so-called *"round"* balers, grain trailers, crop sprayers and similar, large vehicles.

Baling machine 11 as is apparent in Figure 1 includes front and rear axles supporting left and right, front and rear ground-engaging wheels 14, 16 having air-filled tyres 14a, 16a. In Figure 1 the front and rear left-hand wheels 14, 16 are visible. Counterpart front and rear right-hand wheels are of mirror image design and may readily be envisaged on the side of the baling machine 11 that is obscured in Figure 1.

In common with many towed agricultural vehicles, the baling machine 11 in Figure 1 includes a passively steerable rear axle of the general kind explained above. As explained this improves steerability of the tractor-trailer combination and reduces the risk of damage, during steering, to both the tyres of the baling machine 11 and the ground over which it travels.

In other embodiments it is known for both the front and rear axles of a tandem pair to be steerable; or for solely the front axle to be steerable.

For reasons as explained it is desirable for any steerable axle to be capable of being locked in a position corresponding to straight ahead (or straight reversing) movement of the baling machine 11. This is the configuration of the axles visible in Figure 1. To this end the baling machine 11 includes one or more steering locks that operate on the steerable axle(s) in order to lock it/them as outlined.

The steering locks are not shown in the figures but may readily be envisaged. In general they are actuated electrically, hydraulically or electro-hydraulically, depending on the precise baling machine model. One form of steering lock may include a moveable pin that when the axles adopt the straight ahead position shown may be urged e.g. by a force-generating arrangement (such as a solenoid, hydraulic actuator or similar device) selectively into and out of an aperture in a part of the axle, such that when the pin is received in the aperture steering rotation of the axle is prevented. Numerous other steering lock designs are possible as alternatives, and the moveable pin embodiment described above should be regarded as not limiting of the invention.

Actuation mechanisms as described call for the inclusion of a sensing arrangement that is capable of generating electrical command signals for causing engagement or disengagement, as desired, of the steering lock components.

Any such a sensing arrangement must be robust and reliable, in part because the environment in which it is expected to operate can be extremely harsh. The vicinity of the wheels of a baling machine may be associated with dust, vibration, mud, flying projectiles such as stones or twigs, radio-frequency interference, low or high temperatures and moisture (or indeed complete immersion in water) any of which can interfere with correct operation of a sensing sub-system.

In addition any sensing arrangement must be cheap to manufacture and install, and easy to replace or repair in the event of damage.

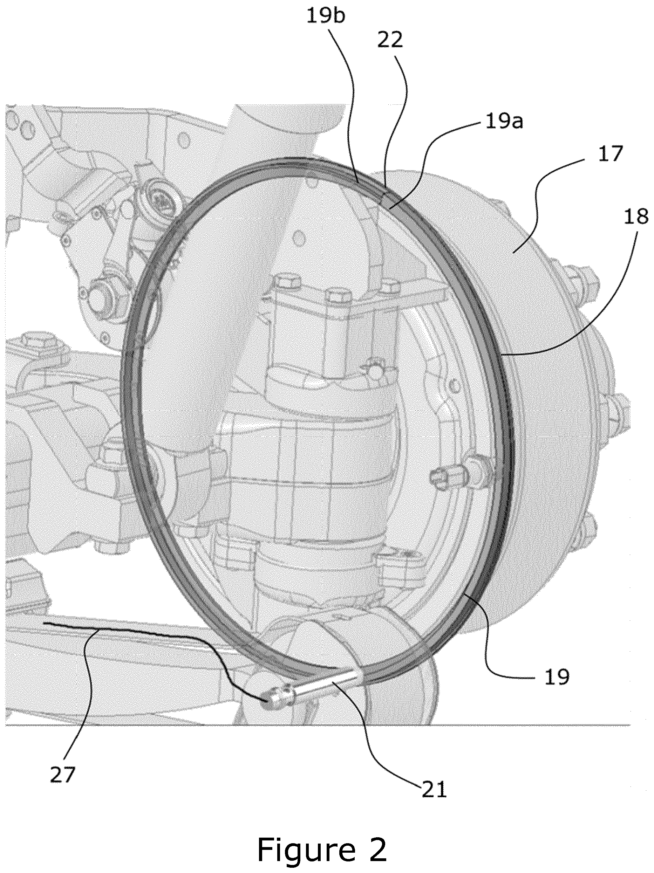

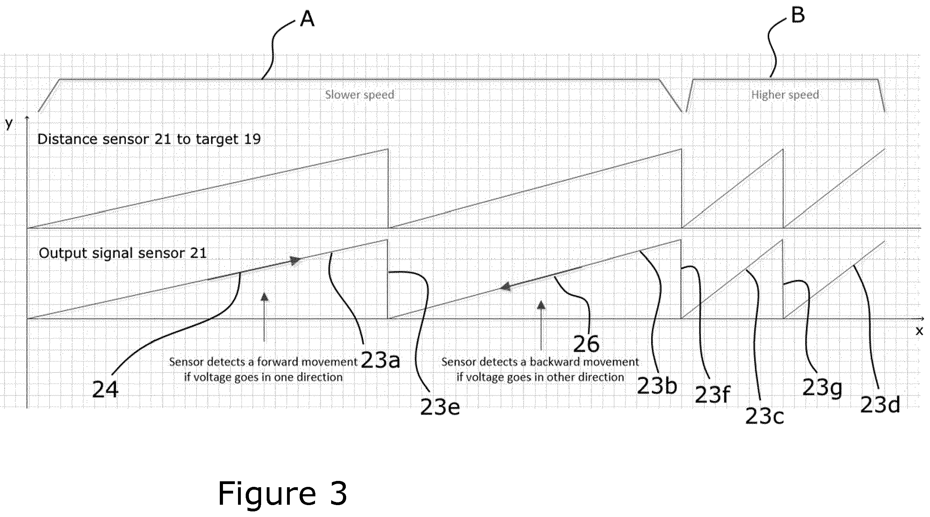

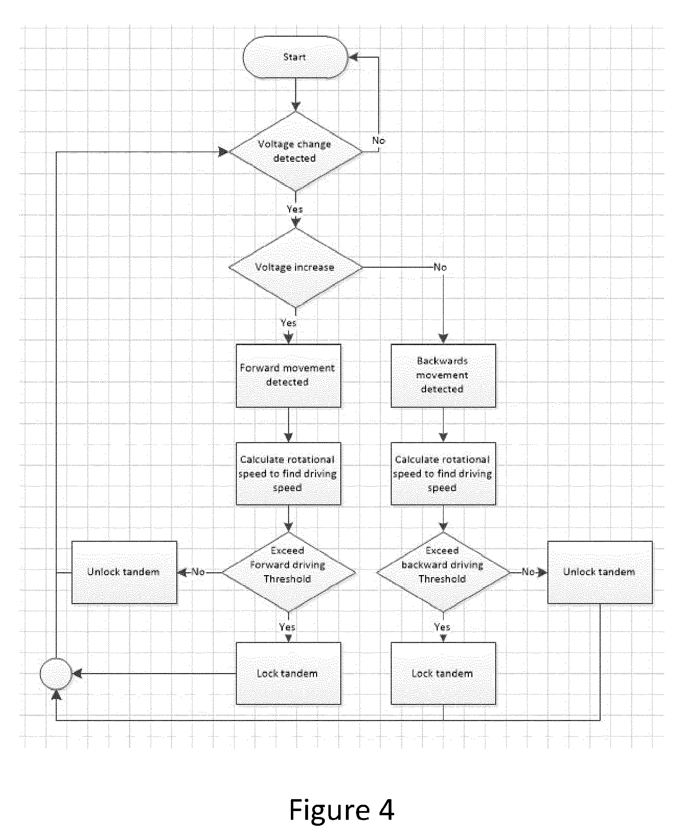

Consequently there is a requirement in the art for a robust, reliable, simple and cheap sensing arrangement that is useable in a wide range of tractor-baler combinations. Such an arrangement is illustrated in Figure 2 hereof, with Figures 3 and 4 assisting to explain the operational principles of the sensing arrangement.

Figure 2 shows in perspective view a support arrangement for a ground-engaging member such as a wheel of a baling machine such as illustrated baling machine 11. The support arrangement includes a hub 17 for a wheel such as wheels 14 and 16, although other forms also are possible. Hence it is possible for the support to include e.g. a drivewheel, a roller, an idler or a sheave of a ground-engaging track. Such components are for the purposes of this disclosure structurally and functionally similar to the hub 17. Consequently any modifications required to render the sensor arrangement suitable for use with such alternative supports may readily be envisaged by the person of skill in the art; and such modifications do not need to be described in detail herein.

Attachment of a wheel such as wheel 16 to the hub is conventional and does not require describing herein.

The illustrated hub 17 is rotatable about a horizontal or essentially horizontal axis, as is also conventional. The hub 17 defines a circular face 18, on the opposite side to that on which a wheel is mounted, that is directed inwardly in the direction of the axis extending towards the lateral centre of the baling machine 11. The face 18 therefore extends in a vertical plane in normal use of the baling machine 11.

Formed on the face 18 is an annular sensor element 19. This takes the form of an annulus of a material that is detectable by a sensor 21 that is mounted in a fixed location e.g. forming part of the frame of the baling machine 10. The annulus extends about a notional circumference that may be imagined on the face 18.

Sensor 21 is capable of generating one or more signals, in particular electrical signals, indicative of detection of the sensor element 19. The sensor 21 is located to this end, i.e. such that its sensing part (which in the non-limiting embodiment of Figure 2 is the forward end of a rigid cylinder) lies proximate the sensor element 19.

In the illustrated (preferred) embodiment the ability of the sensor 21 to sense the sensor element 19 is achieved by reason of the sensor element 19 being formed of a ferromagnetic material (such as a steel alloy) and the sensor 21 being an inductive sensor as mentioned above.

As noted such a material and sensor combination is highly effective, produces unambiguous signals and is cheap to incorporate in a vehicle such as baler 11. However as also mentioned numerous alternative sensing regimes may be employed as will occur to the person of skill in the art.

Sensor element 19 is secured robustly to the face 18 of the hub 17. This may be achieved in any of a variety of ways, including welding, the use of fasteners such as screws or rivets, adhesion using adhesive compounds and forming of the sensor element integrally with the material of the face 18. Combinations of such securing methods are possible.

In the illustrated embodiment sensor element 19 is formed as a circular ring of ferromagnetic metal that may be made e.g. by rolling a metal strip using known techniques. Consequently the sensor element 19 includes a joint 22 at which the ends of the strip meet following a rolling operation in order to define a complete annulus that extends over a 360° circle as illustrated.

Immediately to the right of the joint 22, at location 19a, the sensor element 19 protrudes a minimal distance from face 18 in a direction parallel to the axis of rotation of the hub 17. The depth, and hence the extent of protrusion, of the sensor element 19 increases smoothly and progressively in the clockwise direction such that at a location 19b immediately to the left of the joint 22 as illustrated the degree of protrusion is maximal.

An *"opposite"* arrangement is also possible, in which the increase in protrusion of the sensor element 19 increases when considering an anti-clockwise direction as opposed to the clockwise direction progression illustrated.

When as is preferred the sensor 21 is an inductive sensor, and the arrangement is as illustrated in Figure 2, anticlockwise, constant speed rotation of the sensor element 19 secured on face 18 of rotatable hub 17 causes the distance between the sensor 21 and the sensor element 19 progressively to decrease as a consequence of the varying protrusion of the sensor element 19 as described.

In an inductive sensor this causes the amplitude of an electrical output signal of the sensor 21 to increase progressively over 360° of rotation of the sensor element 19, as the progressively more protruding regions of the sensor element 19 pass the sensor 21, until the joint 22 passes the sensor 21. At this time the distance separating the sensor element 19 from the sensor 21 reverts to a maximal value by reason of the described shape of the sensor element 19. Continuing anticlockwise rotation of the hub and attached sensor element thereafter causes an increasing amplitude signal again to be generated by the sensor 21.

Rotation of the hub 17 and sensor element 19 in a clockwise direction causes an initially high-amplitude, decreasing-amplitude signal to be generated, by reason of progressive increasing of the distance between the sensor element 19 and the sensor 21 (until the joint 22 passes the sensor 21 and the signal generation process repeats in much the same way as for anticlockwise rotation, aside from the positive or negative value of the slope of the generated signal).

Figure 3 summarises these phenomena. In the upper plot of Figure 3 the distance of the sensor element 19 (referred to as a *"target"* in the Figure) is plotted (y-axis of the plot) against the rotational position of the hub 17 (or other support) (x-axis). During relatively slow rotation of the hub 17 as signified during period A marked in Figure 3 as illustrated the periodicity of the distance is relatively long; and when the hub 17 rotates at a higher speed (signified as B in Figure 3) the periodicity reduces accordingly.

The lower plot in Figure 3 plots the amplitude of the output of sensor 21 (y-axis) against the aforesaid rotational position (x-axis). As the hub 17 rotates the distance of the sensor element 19 from the sensor 21 changes and this causes variations in the amplitude of the sensor output signal.

In Figure 3 the output signal 23 is shown at 23a, 23b, 23c, 23d, etc., increasing uniformly in the direction along the y-axis, from an initial low or zero-signal amplitude to a maximum immediately followed by a rapid amplitude decrease as signified by numerals 23de, 23ef, 23g, etc. These outputs correspond to rotation of the sensor element 19 starting with the location 19a adjacent the sensor 21 and with the location 19b and joint 22 repeatedly passing the sensor and thereby producing the illustrated sawtooth function.

If as signified by upwardly extending arrow 24 superimposed on the lower plot of Figure 3 the gradient of the amplitude signal with respect to rotational position is positive this is interpreted as forward motion of the baler 11; and if as signified by superimposed, downwardly extending arrow 26 it is negative this means the hub is rotating in the opposite direction to the situation represented by arrow 24 and is interpreted as reverse motion of the baler 11. An inverse situation may be created if in an alternative embodiment as described above the direction of progressive increase in the thickness of the sensor element 19 is the opposite to that illustrated in Figure 2.

Moreover some types of sensor 21 have inverting outputs such that a reduced amplitude signal is associated with proximity of the thicker parts, of the sensor element 19, such as region 19b; and an increased amplitude signal is associated with the less protruding parts such as region 19a.

The periodicity of the signal amplitude may be used as an indication of the speed of rotation of the hub 17 and hence the speed of movement of the baler 11. Hence the signals 23c, 23d that are associated with period B during which rotation of the wheel occurs at a relatively high rate has a shorter periodicity than the signals 23a and 23b that arise during period A, i.e. when the wheel etc is rotating relatively slowly.

It is apparent therefore from Figure 3 that the signals output by the sensor 21 can be used to distinguish between (a) rotation corresponding respectively to forward and reverse movement of the baler 11 (or other towed vehicle); and (b) whether the baler 11 (or other towed vehicle) is travelling relatively fast or relatively slowly.

Distinguishing between forward and reverse motion, and relatively fast and relatively slow motion, of the baler 11 is carried out by one or more processor that as explained may take a variety of forms and/or be located in a variety of positions relative to the remainder of the apparatus shown in the drawings. Figure 2 shows a schematic connection of the sensor 21 to a processor in the form of a connecting signal wire 27. As explained however it is not essential that a wired connection be used, and numerous alternative arrangements are possible in respect of the nature of the sensor 21, the method(s) of connecting it to the processor(s) and the nature of the processor(s) employed.

The processor(s) following analysis of the sensor amplitude signal is/are arranged to generate one or more commands either initiating engagement (locking) of a tandem lock, or disengagement of such a lock (depending on the initial condition and the assessment of the generated sensor signal 23).

Hence if the processor(s) detect(s) a change in the voltage of signal 23 that corresponds either to reverse motion of the baler 11 or to motion (in either a forward or a reverse direction) at a high speed exceeding a threshold value, and the initial condition is of the tandem lock being disengaged, the processor(s) command(s) locking of the tandem lock in order avoid the potentially hazardous situations indicated above.

If on the other hand the initial condition is that the tandem lock is disengaged and forward motion is detected that is below a threshold speed level then no action is taken to engage the tandem lock.

It the initial condition is that the tandem lock is engaged and a voltage change is detected that corresponds to forward motion of the baler at a speed below the threshold value then the processor(s) command(s) disengagement of the tandem lock.

The foregoing decision rules are summarised in Figure 4, which is a self-explanatory flowchart of a decision algorithm by which the processor(s) may in a preferred embodiment operate to determine whether to engage or disengage the tandem lock (or other type of steering lock if this is provided).

The invention however is not limited to the algorithm of Figure 4, and other decision criteria may be implemented for example through appropriate coding of programmable elements forming part of the processor to which the output of the sensor 21 is transmitted. Other decision criteria also can be implemented for example through the choice of processing elements in a non-programmable processor such as those listed herein.

Figure 3 shows the signals that arise when the hub 17 is rotating at a constant speed. Clearly any rotational speed variations during a detection cycle of the sensor element 19 would modify the signals compared to those illustrated; but it would be a straightforward task to code (or otherwise arrange) any processor(s) so as to provide for effective detection even in the situation of a non-constant rotational speed.

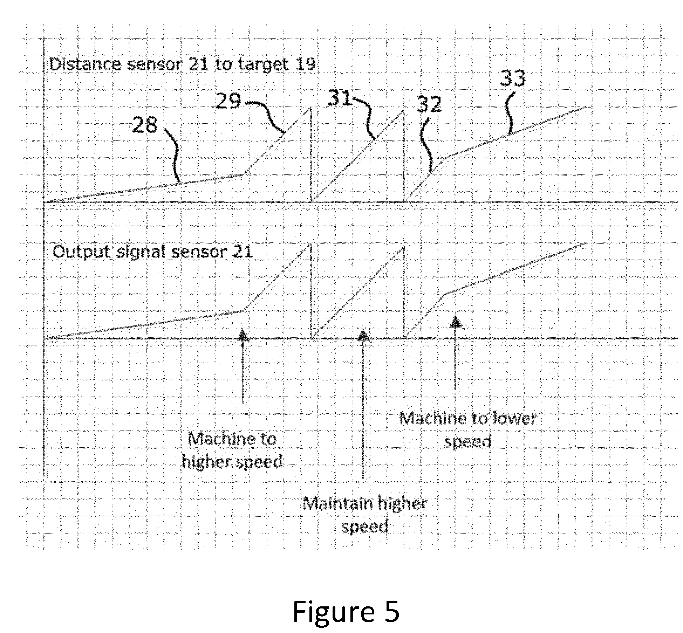

Examples of the kinds of input data and output signals that can arise during variable-speed movement of a baling machine such as machine 11 are illustrated in a non-limiting form in Figure 5. In this Figure the upper plot shows variation of the distance of the sensor 21 from the sensor element (again referred to as a target) 19. In an initial period 28 the baling machine is moving relatively slowly with the consequence that the distance between the sensor 21 and the sensor element 19 is decreasing relatively slowly, giving rise to a comparatively shallow slope of the upper plot at this point. By the time of period 29 however acceleration of the baling machine 11 to a higher speed has occurred, hence the increased slope that is followed by an instantaneous increase in the spacing distance as the joint 22 passes the sensor 21.

Assuming the baling machine continues to move at a higher speed the next revolution 31 of the hub 17 gives rise to a further, relatively high slope distance plot. The subsequent revolution of the hub 17 represented by periods 32 and 33 is characterised by deceleration of the baling machine 11 as represented by the change in slope between these periods of rotation.

The lower plot shows the amplitude of the signal that is output by the sensor 21, and as is to be expected (and as explained by the text in Figure 5) this tracks the sensor distance (input) phenomenon as illustrated.

Of course it is entirely possible for other (typically more complex) patterns of acceleration and deceleration to arise, as would be typical during operation and transportation of a baling machine. Figure 5 is a representation of a simplified working situation for purposes of demonstrating how the signal generated by the sensor 21 may vary. The outputs produced during a more complex combination of acceleration and deceleration events may readily be envisaged by the person of skill in the art.

Another option within the scope of the invention relates to the situation that arises when a tractor-baler combination moves on a hill, especially in a downhill direction. As noted above, at such times the stability of the combination may decrease; and steerable baler axles may worsen such stability reductions. Hence it may be desirable to ensure safe locking of steerable baler (or other trailer) axles when the tractor-baler combination travels in a downhill direction, as may be the case on many roads.

Downhill movement may readily be detected if (as is often the case in modern tractors) the tractor 10 is fitted with an inclinometer. This produces a signal that is proportional to the inclination of the slope on which the tractor moves. This can be fed to the processor responsible for activating the steering lock. The coding of the processor and/or the hardware arrangement may be such that the threshold speed as sensed by the sensor 21 at which the steering lock is engaged is lower when the baler is travelling downhill behind the tractor than when the tractor-baler combination is moving on level ground.

As an alternative to use of an inclinometer a GPS positioning signal may be used to establish whether the tractor is moving on a slope or on level ground, and allow the use of an appropriately reduced threshold speed for activation of the steering lock when the baler is travelling downhill.

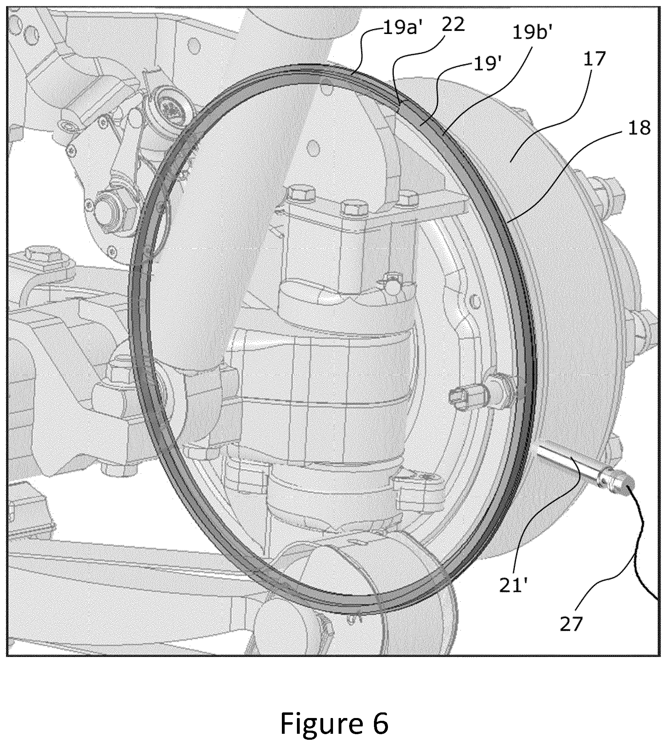

Referring now to Figure 6 there is shown in a view that is similar to Figure 2 another embodiment within the scope hereof. In Figure 6 components having the same, or nearly the same, structure and/or function as in Figure 2 are identified using the same reference numerals as in that Figure. Variants on the Figure 2 components are indicated using *"primed"* reference numerals such as 19' and 21'. In the following the arrangement of the components is described to the extent necessary to explain the differences between the Figure 6 and Figure 2 embodiments.

The Figure 6 support arrangement differs from the support arrangement of Figure 2 in that the sensor element 19' instead of protruding from the face 18 to varying degrees with location around the circumference protrudes by a constant amount in a direction extending inwardly from the hub 17 parallel to the axis of rotation of the hub. However the thickness of the sensor element 19' in a side-to-side direction varies with location around the circumference that it defines.

In particular at a location 19a' on one side of the joint 22 the sensor element is at its thinnest and is represented as a wall section the thickness of which is only a fraction of its protrusion. However the thickness of the sensor element 19' increases progressively in the anticlockwise direction, until it reaches a maximum thickness at location 19b' on the opposite side of joint 22 to location 19a'.

As a result of the foregoing arrangement the amount of material of the sensor element 19' varies in the transverse direction with location about the circumference. Consequently a sensor 21' oriented at right angles to the position of the sensor 21 in Figure 2 will detect varying amounts of sensor element material and consequently will generate one or more signals a parameter (that as noted typically is the amplitude) of which varies in dependence on the rotational position of the hub 17. The arrangement of Figure 6 therefore may give rise to a range of signal outputs that are similar to those shown in Figure 5 and that may be employed in a method such as that summarised in Figure 4.

Figure 6 is a specific example of an arrangement in which the amount of material of the sensor element 21' varies with position around the circumference, as contrasted with the Figure 2 arrangement in which variations in the output signal of the sensor 21 arise as a result of variations in the proximity of the sensor and the sensor element to one another.

It is also possible to devise embodiments in which the variability of Figure 2 is combined with that of Figure 6, such that both the extent of protrusion and the thickness of the sensor element may be varied with location around the circumference. To some extent the Figure 6 embodiment includes such a combination, since in practice both the proximity and the amount of sensor element material vary around the circumference.

A further option as noted above is to vary the amount and/or type of material that is detectable at differing locations by e.g. creating a composite sensor element that is made from more than one material; or by adjusting the density of the material of the sensor element at locations about the circumference. Such variability also may be combined with the Figure 2 and/or the Figure 6 ways of varying the amount of material presented adjacent a sensor such as sensor 21 or sensor 21'.

Also as indicated above the sensor element does not need to be continuous and instead can be interrupted, if desired at multiple locations about the circumference. Furthermore the transitions between (a) relatively protruding and relatively non-protruding; or (b) relatively thick and relatively thin; or (c) relatively dense and relatively less dense; or (d) differently composed parts of the sensor element 19/19' may be smooth as exemplified herein or may in various ways be abrupt. Combinations of smooth and abrupt transitions are possible in one and the same sensor element.

As is apparent from the foregoing, the apparatus of the invention provides a simple, low-cost, robust and reliable means of automating operation of a steering lock of a towed vehicle. The apparatus is effective in towed vehicles that lack ISOBUS Class 3 /TIM (or similar) communications protocol equipment. Replacement of the parts of the sensor arrangement in the event of a maintenance or repair requirement may readily be effected, as is apparent from the nature of the illustrated embodiments, especially if releasable fasteners such as screws are employed in the assembly of the support arrangement.

The listing or discussion of an apparently prior-published document in this specification should not necessarily be taken as an acknowledgement that the document is part of the state of the art or is common general knowledge.

## Claims

1. A rotatable support arrangement for a ground engaging-element (14, 16) of a vehicle (11), the arrangement including a support (17) that is rotatable about an axis of rotation in directions corresponding to forward and reverse movement of the vehicle (11); and that defines a circumference secured to which is a sensor element (19) that is mounted for co-rotation with the support (17), the rotatable support arrangement being **characterized in that** the arrangement further includes a sensor (21) located to detect the sensor element (19) on rotation of the support (17) and wherein the extent to which the sensor element (19) stimulates the sensor (21) varies with position around the circumference such that the sensor (21) generates a signal that is characteristic of the rotational position of the sensor element (19) relative to the sensor (21), and wherein the sensor (21) is operatively connected to one or more processor that is capable of processing one or more signals generated in use by the sensor, the one or more processor being capable of determining one or more of:
a) the rate of change of the signal, being proportional to the speed of rotation of the support; and/or
b) whether the magnitude of the signal is increasing or decreasing, being an indication of the direction of rotation of the support; and/or
c) whether the rate of change of the signal exceeds a threshold value corresponding to a threshold speed of rotation of the support, and generating one or more output signals in dependence thereon.

2. A rotatable support according to Claim 1 wherein the sensor element stimulates the sensor in proportion to the amount of material constituting the sensor element that is for the time being adjacent the sensor, and wherein the amount of material constituting the sensor element varies with position around the circumference.

3. A rotatable support according to Claim 2 wherein the sensor element protrudes from the circumference in a direction parallel to the axis of rotation of the support, and wherein the extent of protrusion of the sensor element varies with position around the circumference.

4. A rotatable support arrangement according to Claim 3 wherein the sensor element extends over the whole of the circumference and increases in protrusion along the circumference from a start location corresponding to little or no protrusion to a location of maximal protrusion adjacent the start location.

5. A rotatable support arrangement according to Claim 4 wherein the protrusion of the sensor element from the circumference increases smoothly and continuously between the start location and the location of maximal protrusion.

6. A rotatable support arrangement according to Claim 2 or any preceding claim depending from Claim 2, wherein the sensor element defines a width or thickness that varies with position around the circumference.

7. A rotatable support arrangement according to Claim 6 wherein the sensor element extends over the whole of the circumference and increases in width or thickness along the circumference from a start location corresponding to minimal width to a location of maximal width adjacent the start location.

8. A rotatable support arrangement according to Claim 7 wherein the width or thickness of the sensor element increases smoothly and continuously between the start location and the location of maximal width.

9. A rotatable support arrangement according to any preceding claim wherein the sensor is or includes one or more selected from the list including inductive sensors, laser sensors, magnetic sensors, acoustic sensors and optical sensors.

10. A rotatable support arrangement according to any preceding claim when configured as the rotatable hub of an axle of a ground-engaging wheel.

11. A rotatable support arrangement according to Claim 10 wherein the ground-engaging wheel is a wheel of an agricultural baling machine.

12. A rotatable support arrangement according to Claim 11 wherein the agricultural baling machine includes at least one steerable axle supporting one or more ground-engaging wheels; and a lock mechanism for temporarily preventing steering of a said steerable axle wherein the one or more output signals of the one or more processor is capable of activating or deactivating, as required, the lock mechanism based on:
if the direction of rotation of the support represents forward movement of the agricultural baling machine: whether the rate of change of the signal exceeds a forward driving threshold; or
if the direction of rotation of the support represents backwards movement of the agricultural baling machine: whether the rate of change of the signal exceeds a backward driving threshold.

13. A rotatable support arrangement according to Claim 12 wherein the baling machine includes two axles at least one of which is steerable and the lock mechanism is configured as a tandem lock.

14. A rotatable support arrangement according to Claim 12 or Claim 13 wherein at least one said steerable axle is pivotable about a vertically extending axis that intersects the said axis of rotation at a location spaced from the rotatable support along the axis of rotation; and at least one resiliently deformable member connected to provide a biassing force that urges the rotatable support to an orientation, about the vertically extending axis, that corresponds to straight ahead movement of the baling machine.

15. A rotatable support arrangement according to any of Claims 1 to 9 when configured as a drivewheel, a roller, an idler or a sheave of a ground-engaging track.

16. A vehicle including one or more rotatable support arrangement according to any preceding claim.

## Patentansprüche

1. Drehbare Trägeranordnung für ein Bodeneingriffselement (14, 16) eines Fahrzeugs (11), wobei die Anordnung einen Träger (17) einschließt, der um eine Drehachse in Richtungen drehbar ist, die der Vorwärts- und Rückwärtsbewegung des Fahrzeugs (11) entsprechen; und der einen Umfang definiert, an dem ein Sensorelement (19) befestigt ist, das zur gemeinsamen Drehung mit dem Träger (17) montiert ist, wobei die drehbare Trägeranordnung **dadurch gekennzeichnet ist, dass** die Anordnung ferner einen Sensor (21) einschließt, der so angeordnet ist, dass er das Sensorelement (19) bei Drehung des Trägers (17) erfasst, und wobei das Ausmaß, in dem das Sensorelement (19) den Sensor (21) stimuliert, mit der Position um den Umfang herum variiert, sodass der Sensor (21) ein Signal erzeugt, das für die Drehposition des Sensorelements (19) relativ zu dem Sensor (21) charakteristisch ist, und wobei der Sensor (21) funktionell mit einem oder mehreren Prozessoren verbunden ist, die in der Lage sind, ein oder mehrere Signale zu verarbeiten, die im Gebrauch durch den Sensor erzeugt werden, wobei der eine oder die mehreren Prozessoren in der Lage sind, eines oder mehrere zu bestimmen von:
a) der Änderungsrate des Signals, die proportional zur Drehzahl des Trägers ist; und/oder
b) ob die Größe des Signals zunimmt oder abnimmt, was ein Hinweis auf die Drehrichtung des Trägers ist; und/oder
c) ob die Änderungsrate des Signals einen Grenzwert überschreitet, der einer Grenzdrehzahl des Trägers entspricht, und Erzeugen eines oder mehrerer Ausgangssignale in Abhängigkeit davon.

2. Drehbarer Träger nach Anspruch 1, wobei das Sensorelement den Sensor im Verhältnis zu der Menge an Material stimuliert, die das Sensorelement bildet und die dem Sensor jeweils benachbart ist, und wobei die Menge an Material, die das Sensorelement bildet, mit der Position um den Umfang variiert.

3. Drehbarer Träger nach Anspruch 2, wobei das Sensorelement von dem Umfang in einer Richtung parallel zu der Drehachse des Trägers vorsteht, und wobei das Ausmaß des Vorsprungs des Sensorelements mit der Position um den Umfang variiert.

4. Drehbare Trägeranordnung nach Anspruch 3, wobei sich das Sensorelement über den gesamten Umfang erstreckt und der Vorsprung entlang des Umfangs von einer Startposition, die wenig oder keinem Vorsprung entspricht, zu einer Position maximalen Vorsprungs benachbart zur Startposition zunimmt.

5. Drehbare Trägeranordnung nach Anspruch 4, wobei der Vorsprung des Sensorelements vom Umfang zwischen der Startposition und der Position des maximalen Vorsprungs gleichmäßig und kontinuierlich zunimmt.

6. Drehbare Trägeranordnung nach Anspruch 2 oder einem vorstehenden Anspruch, der von Anspruch 2 abhängt, wobei das Sensorelement eine Breite oder Dicke definiert, die mit der Position um den Umfang variiert.

7. Drehbare Trägeranordnung nach Anspruch 6, wobei sich das Sensorelement über den gesamten Umfang erstreckt und entlang des Umfangs in der Breite oder Dicke von einer Startposition, die einer minimalen Breite entspricht, bis zu einer Position maximaler Breite angrenzend an die Startposition zunimmt.

8. Drehbare Trägeranordnung nach Anspruch 7, wobei die Breite oder Dicke des Sensorelements zwischen der Startposition und der Position maximaler Breite gleichmäßig und kontinuierlich zunimmt.

9. Drehbare Trägeranordnung nach einem der vorstehenden Ansprüche, wobei der Sensor einer oder mehrere ist oder umfasst, ausgewählt aus der Liste, die induktive Sensoren, Lasersensoren, magnetische Sensoren, akustische Sensoren und optische Sensoren einschließt.

10. Drehbare Trägeranordnung nach einem der vorstehenden Ansprüche, wenn sie als die drehbare Nabe einer Achse eines Bodeneingriffsrads konfiguriert ist.

11. Drehbare Trägeranordnung nach Anspruch 10, wobei das Bodeneingriffsrad ein Rad einer landwirtschaftlichen Ballenpresse ist.

12. Drehbare Trägeranordnung nach Anspruch 11, wobei die landwirtschaftliche Ballenpresse mindestens eine lenkbare Achse einschließt, die ein oder mehrere Bodeneingriffsräder trägt; und einen Verriegelungsmechanismus zum vorübergehenden Verhindern des Lenkens einer lenkbaren Achse, wobei das eine oder die mehreren Ausgangssignale des einen oder der mehreren Prozessoren in der Lage ist, den Verriegelungsmechanismus nach Bedarf zu aktivieren oder zu deaktivieren, basierend auf:
wenn die Drehrichtung des Trägers eine Vorwärtsbewegung der landwirtschaftlichen Ballenpresse darstellt: ob die Änderungsrate des Signals einen Schwellenwert für die Geradeausfahrt überschreitet; oder
wenn die Drehrichtung des Trägers eine Rückwärtsbewegung der landwirtschaftlichen Ballenpresse darstellt: ob die Änderungsrate des Signals einen Schwellenwert für die Rückwärtsfahrt überschreitet.

13. Drehbare Trägeranordnung nach Anspruch 12, wobei die Ballenpresse zwei Achsen einschließt, von denen mindestens eine lenkbar ist, und der Verriegelungsmechanismus als Tandemverriegelung ausgebildet ist.

14. Drehbare Trägeranordnung nach Anspruch 12 oder Anspruch 13, wobei mindestens eine lenkbare Achse um eine sich vertikal erstreckende Achse schwenkbar ist, die die Drehachse an einer von dem drehbaren Träger entlang der Drehachse beabstandeten Stelle schneidet; und mindestens ein elastisch verformbares Element so verbunden ist, dass es eine Vorspannkraft bereitstellt, die den drehbaren Träger in eine Ausrichtung um die sich vertikal erstreckende Achse drängt, die einer geradeaus gerichteten Bewegung der Ballenpresse entspricht.

15. Drehbare Trägeranordnung nach einem der Ansprüche 1 bis 9, wenn sie als ein Antriebsrad, eine Rolle, ein Leitrad oder eine Scheibe einer Bodeneingriffskette ausgebildet ist.

16. Fahrzeug, einschließlich einer oder mehrerer drehbarer Trägeranordnungen nach einem der vorstehenden Ansprüche.

## Revendications

1. Agencement de support rotatif pour un élément venant en prise avec le sol (14, 16) d'un véhicule (11), l'agencement comportant un support (17) qui est rotatif autour d'un axe de rotation dans des directions correspondant à un mouvement avant et arrière du véhicule (11) ; et qui définit une circonférence à laquelle est fixé un élément capteur (19) qui est monté pour une co-rotation avec le support (17), l'agencement de support rotatif étant **caractérisé en ce que** l'agencement comporte en outre un capteur (21) positionné de manière à détecter l'élément capteur (19) lors d'une rotation du support (17), et dans lequel la mesure dans laquelle l'élément capteur (19) stimule le capteur (21) varie avec la position autour de la circonférence de telle sorte que le capteur (21) génère un signal qui est caractéristique de la position de rotation de l'élément capteur (19) par rapport au capteur (21), et dans lequel le capteur (21) est connecté de manière fonctionnelle à un ou plusieurs processeurs capables de traiter un ou plusieurs signaux générés par le capteur lorsqu'il est utilisé, le ou les processeurs étant capables de déterminer un ou plusieurs parmi :
a) la vitesse de variation du signal, laquelle est proportionnelle à la vitesse de rotation du support ; et/ou
b) si l'amplitude du signal augmente ou diminue, ce qui est une indication du sens de rotation du support ; et/ou
c) si le taux de variation du signal dépasse une valeur seuil correspondant à une vitesse seuil de rotation du support, et la génération d'un ou de plusieurs signaux de sortie en fonction de celle-ci.

2. Support rotatif selon la revendication 1, dans lequel l'élément capteur stimule le capteur proportionnellement à la quantité de matériau constituant l'élément capteur qui est temporairement adjacent au capteur, et dans lequel la quantité de matériau constituant l'élément capteur varie avec la position autour de la circonférence.

3. Support rotatif selon la revendication 2, dans lequel l'élément capteur fait saillie de la circonférence dans une direction parallèle à l'axe de rotation du support, et dans lequel l'étendue de la saillie de l'élément capteur varie avec la position autour de la circonférence.

4. Agencement de support rotatif selon la revendication 3, dans lequel l'élément capteur s'étend sur toute la circonférence et sa saillie augmente le long de la circonférence à partir d'un emplacement de départ correspondant à peu ou pas de saillie jusqu'à un emplacement de saillie maximale adjacent à l'emplacement de départ.

5. Agencement de support rotatif selon la revendication 4, dans lequel la saillie de l'élément capteur par rapport à la circonférence augmente progressivement et continuellement entre l'emplacement de départ et l'emplacement de saillie maximale.

6. Agencement de support rotatif selon la revendication 2 ou l'une quelconque revendication précédente dépendant de la revendication 2, dans lequel l'élément capteur définit une largeur ou une épaisseur qui varie avec la position autour de la circonférence.

7. Agencement de support rotatif selon la revendication 6, dans lequel l'élément capteur s'étend sur toute la circonférence et augmente en largeur ou en épaisseur le long de la circonférence, d'un emplacement de départ correspondant à une largeur minimale à un emplacement de largeur maximale adjacent à l'emplacement de départ.

8. Agencement de support rotatif selon la revendication 7, dans lequel la largeur ou l'épaisseur de l'élément capteur augmente progressivement et continuellement entre l'emplacement de départ et l'emplacement de largeur maximale.

9. Agencement de support rotatif selon l'une quelconque revendication précédente, dans lequel le capteur est ou comporte un ou plusieurs éléments choisis dans la liste incluant capteurs inductifs, capteurs laser, capteurs magnétiques, capteurs acoustiques et capteurs optiques.

10. Agencement de support rotatif selon l'une quelconque revendication précédente, lorsqu'il est conçu en tant que moyeu rotatif d'un essieu d'une roue venant en prise avec le sol.

11. Agencement de support rotatif selon la revendication 10, dans lequel la roue venant en prise avec le sol est une roue d'une presse à balles agricole.

12. Agencement de support rotatif selon la revendication 11, dans lequel la presse à balles agricole comporte au moins un essieu directionnel supportant une ou plusieurs roues venant en prise avec le sol ; et un mécanisme de verrouillage pour empêcher temporairement la direction d'un dit essieu directionnel, dans lequel le ou les signaux de sortie du ou des processeurs sont capables d'activer ou de désactiver, selon le besoin, le mécanisme de verrouillage selon que :
le sens de rotation du support représente ou non un mouvement vers l'avant de la presse à balles agricole : si le taux de variation du signal dépasse un seuil d'entraînement vers l'avant ; ou
le sens de rotation du support représente ou non un mouvement vers l'arrière de la presse à balles agricole : si le taux de variation du signal dépasse un seuil d'entraînement vers l'arrière.

13. Agencement de support rotatif selon la revendication 12, dans lequel la presse à balles comporte deux essieux, dont au moins un est directionnel, et le mécanisme de verrouillage est conçu comme un verrou en tandem.

14. Agencement de support rotatif selon la revendication 12 ou la revendication 13, dans lequel au moins un essieu directionnel peut pivoter autour d'un axe s'étendant verticalement qui coupe ledit axe de rotation au niveau d'un emplacement espacé du support rotatif le long de l'axe de rotation ; et d'au moins un organe élastiquement déformable relié pour fournir une force de sollicitation qui pousse le support rotatif vers une orientation, autour de l'axe s'étendant verticalement, qui correspond à la marche avant en ligne droite de la presse à balles.

15. Agencement de support rotatif selon l'une quelconque des revendications 1 à 9, lorsqu'il est conçu comme une roue motrice, un rouleau, un galet tendeur ou une poulie d'une chenille venant en prise avec le sol.

16. Véhicule comportant un ou plusieurs agencements de support rotatifs selon l'une quelconque revendication précédente.
